**Europäisches Patentamt**

**European Patent Office**

**Office européen des brevets**

(19)

(11) Numéro de publication: **0 236 651
B1**

(12) **FASCICULE DE BREVET EUROPEEN**

(45) Date de publication du fascicule du brevet:
03.10.90

(51) Int. Cl.⁵: **A21C 15/00,** A21D 13/08

(21) Numéro de dépôt: **86440029.6**

(22) Date de dépôt: **15.04.86**

(54) **Procédé de fabrication d'une tarte et garniture de tarte selon une mise en oeuvre du dit procédé.**

(30) Priorité: **13.03.86 FR 8603955**

(43) Date de publication de la demande:
**16.09.87 Bulletin 87/38**

(45) Mention de la délivrance du brevet:
**03.10.90 Bulletin 90/40**

(84) Etats contractants désignés:
**AT BE CH DE GB IT LI LU NL SE**

(56) Documents cités:
**FR-A- 2 012 681
GB-A- 1 280 611
GB-A- 2 049 537
US-A- 3 503 345
US-A- 4 207 348**

(73) Titulaire: **Simone JANSSEN, épouse NICOLAI, Vron,
F-80120 Rue (Somme)(FR)**

(72) Inventeur: **Simone JANSSEN, épouse NICOLAI, Vron,
F-80120 Rue (Somme)(FR)**

(74) Mandataire: **Lepage, Jean-Pierre, Cabinet Lepage &
Aubertin Innovations et Prestations 23/25, rue Nicolas
Leblanc B.P. 1069, F-59011 Lille Cédex 1 (Nord)(FR)**

ACTORUM AG

## Description

L'invention est relative à un procédé de fabrication d'une tarte ainsi qu'une garniture de tarte selon une mise en oeuvre du dit procédé. Elle trouvera notamment son application dans le domaine de la pâtisserie pour la confection de mets sucrés ou salés.

En matière culinaire, on peut distinguer deux types de fabrication, la "fabrication maison" et la fabrication "industrielle", chacune de ces catégories présentant des avantages et des inconvénients. Néanmoins, la présente invention trouvera avantageusement son application dans ces deux catégories.

Plus spécialement, dans le domaine de la pâtisserie, on connaît les tartes confectionnées avec des produits salés destinés à être servies en entrées et les tartes confectionnées avec des produits sucrés tels que des fruits destinées à être dégustées au dessert.

Dans ce domaine, les temps d'élaboration relativement longs entrent pour une part importante dans le coût de revient. Ceci n'a pas d'effets pécuniers dans le cas de fabrication par la ménagère mais par contre se répercute de façon sensible sur le prix de revient dans les autres cas (pâtisserie artisanale ou industrielle).

Par ailleurs, lorsque la ménagère choisit de confectionner une tarte elle-même, il est nécessaire qu'elle dispose d'un temps libre important, ce qui peut rebuter certaines ménagères.

En outre, il existe également des fabrications industrielles de tartes, ce qui permet d'obtenir des produits bon marché notamment en raison de l'utilisation de nombreux moyens automatiques et d'achats de matières premières en grande quantité. Malheureusement, les tartes obtenues sont bien souvent de qualité médiocre étant donné que les procédés utilisés et les produits employés ne sont pas conformes aux traditions culinaires.

Généralement, la fabrication d'une tarte se décompose en la réalisation d'une garniture et l'élaboration d'une pâte.

La fabrication de la pâte est assez longue, toutefois il est possible soit de trouver dans le commerce une pâte déjà préparée qu'il ne reste plus qu'à mettre en forme, soit de réaliser la pâte dans des installations de pétrissage mécanisées. Ceci permettra un gain de temps important sans nuire au résultat et à la qualité.

Par contre, la confection de la garniture de tarte est très longue étant donné qu'elle nécessite souvent la mise en place de nombreux éléments indépendants juxtaposés. En prenant l'exemple d'un fruit, tel qu'une pomme, il est nécessaire d'éplucher le fruit, d'extraire le centre et les pépins puis de découper la pomme en lamelles et de disposer les lamelles selon un dessin régulier sur le fond de la tarte.

Ainsi, la préparation de la garniture requiert donc un temps passé important et il est d'autant plus dommage de devoir consacrer une partie importante du temps à la confection de la garniture que précisément il ne s'agit que d'une opération machinale et qui n'a aucune incidence sur la saveur du dessert obtenu pourvu que les produits soient de qualité.

En effet, les propriétés gustatives de la tarte sont essentiellement fonction des différents dosages notamment en sucre, du travail de la pâte et de la cuisson. La mise en place des lamelles de fruits sur le fond de tarte selon un motif ornemental est une opération fastidieuse et particulièrement ingrate puisqu'elle n'a aucune répercussion au niveau de la saveur de la tarte obtenue.

Cela étant, il est connu d'utiliser la congélation ou la surgélation en matière culinaire et on connaît à ce sujet les documents FR-A 2 012 681 concernant le remplissage de chaussons ou pâtés, le document US-A 4 207 348 concernant la fabrication de sandwichs formés de pâte et d'un remplissage précongelé, ou encore le document GB-1 280 611 relatif à la préparation de gâteaux congelés du type "pie" ou "pudding".

Cependant, ces différents documents ne permettent pas de solutionner le problème que se pose la présente invention et d'éliminer les inconvénients précités lors de la fabrication d'une tarte.

Le but principal de la présente invention est de présenter un procédé de fabrication d'une tarte qui offre les avantages de la "fabrication maison" tout en demandant un temps de préparation extrêmement réduit. Le principal obstacle, c'est-à-dire le temps requis pour la réalisation de la garniture, est donc levé par la mise en œuvre du procédé de la présente invention.

L'aide apportée est particulièrement appréciable puisque dorénavant il n'y a plus lieu de se soucier de la confection de la garniture de tarte, qui selon le procédé de la présente invention est réalisée totalement indépendamment de la tarte proprement dite.

La ménagère ou le pâtissier reste maître du dosage des ingrédients et de la cuisson ce qui lui permet de caractériser à son goût le dessert et, la garniture déjà préparée selon le procédé de la présente invention n'a plus qu'à être incorporée à la tarte sans autre forme de préparation.

Un autre but de la présente invention est de présenter une garniture de tarte formée d'une juxtaposition d'éléments indépendants tels que des lamelles de fruits qui soient manipulables en bloc.

Toute la difficulté d'une préparation séparée de garniture de tarte par rapport au fond de tarte est que la garniture est généralement réalisée par une mise en place d'éléments souples ne présentant aucune cohésion ni moyen de liaison entre eux et répartis selon une forme géométrique. Etant donné cette absence de liaison, jusqu'à présent, les garnitures de tartes ne peuvent être manipulées indépendamment d'un support et en particulier il n'est pas possible de disposer sur le fond de tarte l'ensemble des lamelles de fruits qui auraient été préparées indépendamment étant donné leur manque de cohésion.

D'autres buts et avantages de la présente invention apparaîtront au cours de la description qui va suivre qui n'est cependant donnée qu'à titre indicatif et qui n'a pas pour but de la limiter.

Selon l'invention, le procédé de fabrication d'une tarte, qui trouvera son application dans le domaine de la pâtisserie pour la confectin de mets salés ou sucrés, la dite tarte étant composée d'un fond de tarte à base de pâte et d'une garniture constituée d'éléments, tels que des morceaux ou lamelles de fruits, répartis sur le dit fond selon un dessin géométrique ou autre, les dits éléments étant indépendants les uns des autres et sans cohésion pour les maintenir entre eux les uns aux autres, est caractérisé par le fait que:

– on réalise la garniture, à part du fond, en plaçant lesdits éléments indépendants selon le dessin souhaité, et en les juxtaposant avec un certain recouvrement afin qu'ils présentent une surface de contact,

– on fixe la garniture de sorte à ce que lesdits éléments indépendants, ainsi disposés, forment un bloc manipulable, par l'intermédiaire de moyens de cohésion se présentant sous la forme d'une solidification par refroidissement desdits éléments, ces éléments se solidarisant entre eux, deux à deux,

– on place la garniture sur le fond de tarte cuit ou à cuire.

La garniture de tarte, destinée à remplir un fond de tarte, constituée d'éléments, tels que des morceaux ou des lamelles de fruits, disposés relativement entre eux selon un dessin géométrique ou autre, lesdits éléments étant indépendants les uns des autres et sans cohésion pour les maintenir entre eux les uns aux autres, autorisant la mise en œuvre du procédé de la présente invention, est caractérisée par le fait qu'elle se présente sous la forme d'une juxtaposition desdits éléments indépendants, avec un certain recouvrement afin qu'ils présentent une surface de contact, solidarisés entre eux par l'intermédiaire de moyens de cohésion se présentant sous la forme d'une solidification par refroidissement desdits éléments ainsi disposés.

L'invention sera mieux comprise à la lecture de la description suivante accompagnée de dessins en annexe parmi lesquels:

– la figure 1 schématise les différentes étapes pour la mise en œuvre du procédé de fabrication de la présente invention,

– la figure 2 illustre en vue de coupe la mise en place des différents éléments indépendants de formation de la garniture.

La présente invention vise un procédé de fabrication d'une tarte ainsi qu'une garniture de tarte pour la mise en œuvre dudit procédé. Elle trouvera notamment son application dans le domaine de la pâtisserie pour la confection de mets sucrés ou salés.

Bien que plus généralement consommées au dessert, les tartes peuvent également être servies en entrée auquel cas elles sont garnies de légumes ou autres tels que des oignons.

La présente invention vise plus particulièrement les tartes dont la garniture est formée d'éléments indépendants juxtaposés tels que des morceaux de fruits ou légumes présentés par exemple sous forme de lamelles.

Jusqu'à présent, ce type de garniture n'a pu être réalisé indépendamment d'un support en raison de son manque de cohésion. Le fond de tarte constitue le support et donc la mise en place de la garniture ne peut être réalisée que postérieurement à la confection du fond de tarte. Cette chronologie dans la fabrication fait qu'il n'est pas possible d'acquérir la garniture seule de tarte déjà préparée.

Ceci est d'autant plus regrettable que la confection de la garniture représente une opération longue et fastidieuse sans réel incident sur les propriétés gustatives du produit obtenu.

La présente invention permet précisément de s'affranchir de la confection personnelle de la garniture qui peut dorénavant être ainsi déjà préparée et vendue séparément dans le commerce. Toutefois, il sera possible de réaliser une tarte "fabrication maison" y consacrant un minimum de temps.

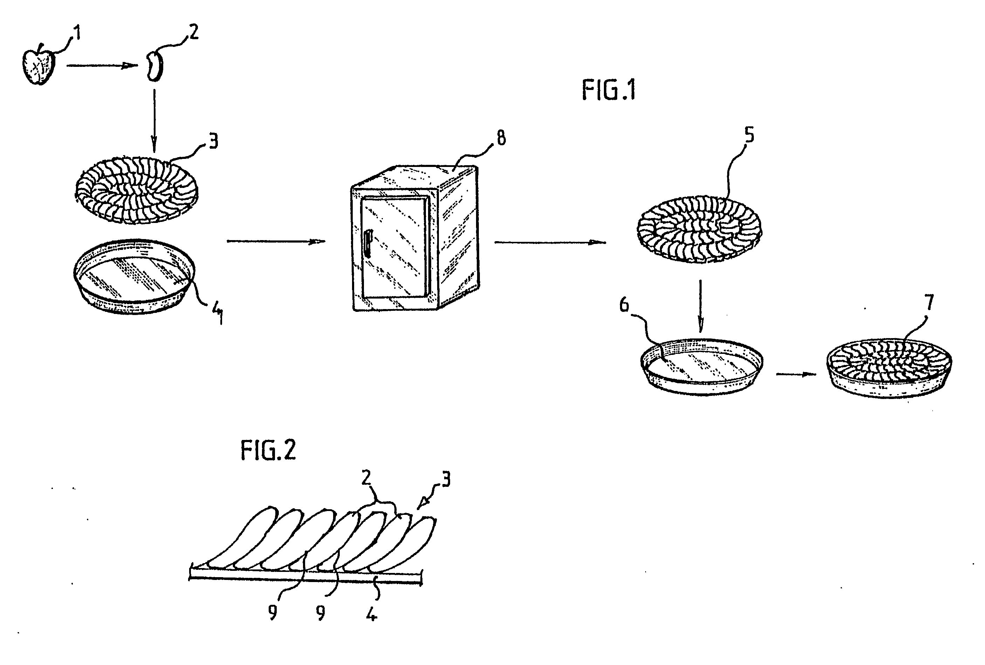

La figure 1 schématise les différentes phases du procédé de fabrication d'une tarte selon la présente invention.

Dans l'exemple choisi, il s'agit d'une tarte aux pommes toutefois d'autres fruits ou légumes auraient pu parfaitement être envisagés.

Bien que l'intégralité des opérations du procédé peuvent être réalisées par la même personne, l'invention présente un réel intérêt dans la mesure où l'on distingue une phase préalable de préparation industrielle de la garniture et une réalisation postérieurs de la tarte.

La pomme 1 est tout d'abord épluchée puis son centre est extrait pour ôter les noyaux et enfin elle est découpée en lamelles 2.

Ces lamelles 2 forment des éléments indépendants qui sont disposés d'une certaine façon selon la forme définitive de la garniture 3 à obtenir. Généralement, les différents éléments indépendants 2 sont répartis selon un dessin géométrique ou autres qui donne à la garniture un effet ornemental.

Pour faciliter la mise en place de la garniture, on utilise généralement un moule 4. Il est à remarquer que le terme moule doit être pris dans sons sens large et peut par exemple être formé d'une feuille d'aluminium disposant d'un rebord ou de toute autre cavité en forme prévue à cet effet.

Il faut souligner que cette opération de préparation de la garniture peut être réalisé industriellement c'est-à-dire en employant des machines industrielles pour réaliser l'épluchage et la préparation des légumes ou fruits ainsi que la mise en place des morceaux de garniture dans le moule 4.

Jusqu'à présent, il s'agit d'un procédé de préparation de garniture classique si ce n'est que la mise en place des lamelles de fruits est réalisée sur le fond de tarte et non dans un moule 4 indépendant.

Selon le procédé de fabrication de la présente invention, on fixe la garniture de sorte à ce que les éléments indépendants 2 forment un bloc compact et manipulable 5.

Il s'agit d'une étape décisive dans le procédé de fabrication puisque les éléments indépendants qui jusqu'à présent ne présentaient aucune cohésion et par conséquent ne pouvaient être manipulés en bloc, forment désormais un ensemble homogène qui peut être manipulé aussi facilement que s'il s'agissait d'une pièce rigide formé d'un seul tenant.

Cette propriété peut être exploitée au cours de toute la phase de commercialisation de la garniture.

C'est-à-dire qu'après avoir été fixée au cours de la phase de fabrication industrielle, la garniture peut être stockée, transportée et commercialisée sous forme rigide, l'utilisateur pourra donc acquérir la garniture sous forme rigide et l'employer telle quelle.

Le fond de tarte 6 peut être confectionné indépendamment de la garniture 5. Ce fond de tarte est généralement réalisé à base de pâte pétrie et mise en forme. La garniture 5 compacte peut être mise en place sur le fond de tarte 6 alors que ce dernier a déjà été cuit ou doit encore être cuit.

Une fois la garniture mise en place sur le fond de tarte 6, on obtient une tarte 7 prête à être dégustée.

Selon le schéma indiqué précédemment, la ménagère ou le pâtissier reste maitre des éléments essentiels de confection de la tarte c'est-à-dire le dosage des ingrédients et la cuisson mais par contre n'a pas à s'inquiéter de la confection de la garniture qui peut être achetée préalablement et facilement être utilisée sans perte de temps.

Bien entendu, à l'issue de l'opération de mise en place de la garniture 5 sur le fond de tarte 6, il est nécessaire de rendre aux différents éléments indépendants leur état naturel pour qu'ils retrouvent toute leur saveur.

Différentes solutions peuvent être envisagées pour obtenir la fixation de la garniture 3. Par exemple, l'utilisation de sucre, de gelée ou autre produit permettant d'établir une liaison entre les différents éléments indépendants 2. De plus, les solutions proposées précédemment ne permettent pas d'obtenir une garniture rigide mais tout au plus compacte.

La solution préférentielle préconisée par la présente invention consiste à fixer la garniture par surgélation. Ce procédé permet de conserver aux aliments toute leur saveur sans en altérer le goût et de plus, la garniture 5 fixée présente une parfaite rigidité ce qui facilite grandement sa manipulation.

Donc, en se référant à la figure 1, la garniture 3 mise en place dans le moule 4 est placée dans un appareil 8 de congélation qui permet de fixer la garniture jusquà ce qu'elle soit placée sur le fond de tarte 6 auquel cas l'utilisateur laissera la garniture 5 se réchauffer pour qu'elle retrouve ses propriétés naturelles.

La figure 2 schématise la mise en place des différents éléments indépendants 2 sur le moule 4 pour former la garniture 3. Il est souhaitable de répartir ces éléments indépendants 2 sur le moule 4 de telle sorte que les éléments présentent une zone de recouvrement afin qu'ils disposent d'une surface de contact 9. Il est en effet souhaitable pour obtenir après surgélation, une garniture compacte, que les éléments indépendants présentent des surfaces de contact afin de donner une cohésion à l'ensemble.

Puisqu'une fois la garniture surgelée, celle-ci ne devra subir aucune modification de forme, il est nécessaire que le profil du moule 4 soit sensiblement identique à la forme du fond de tarte 6 ou inversement pour permettre une mise en place aisée de la garniture 5 dégagée du moule 4 sur le fond de tarte 6.

La présente invention concerne également la garniture de tarte destinée à être mise en place sur un fond de tarte, ladite garniture étant formée d'une juxtaposition d'éléments indépendants 2 qui présentent des moyens de cohésion pour former un ensemble rigide et compact.

Les moyens de cohésion utilisés sont notamment une solidification par refroidissement des différents éléments indépendants qui demeurent fixés les uns aux autres par la glace ainsi créée.

**Revendications**

1. Procédé de fabrication d'une tarte, qui trouvera son application dans le domaine de la pâtisserie pour la confection de mets salés ou sucrés, ladite tarte (7) étant composée d'un fond de tarte (6) à base de pâte et d'une garniture (3, 5) constituée d'éléments (2), tels que des morceaux ou lamelles de fruits, répartis sur ledit fond (6) selon un dessin géométrique ou autre, lesdits éléments (2) étant indépendants les uns des autres et sans cohésion pour les maintenir entre eux les uns aux autres, caractérisé par le fait que:
   - on réalise le garniture (3), à part du fond (6), en plaçant lesdits éléments indépendants (2) selon le dessin souhaité, et en les juxtaposant avec un certain recouvrement afin qu'ils présentent une surface de contact (9),
   - on fixe la garniture (3) de sorte à ce que lesdits éléments indépendants (2), ainsi disposés, forment un bloc manipulable (5), par l'intermédiaire de moyens de cohésion se présentant sous la forme d'une solidification par refroidissement desdits éléments (2), ces éléments se solidarisant entre eux, deux à deux,
   - on place la garniture (5) sur le fond de tarte (6) cuite ou à cuire.

2. Procédé de fabrication d'une tarte selon la revendication 1, caractérisé en ce que l'on fixe la garniture (3) par surgélation.

3. Procédé de fabrication d'une tarte selon la revendication 1, caractérisé en ce que l'on met en place les différents éléments indépendants (2) dans un moule (4) de profil sensiblement identique à celui du fond de tarte (6).

4. Procédé de fabrication d'une tarte selon la revendication 1, caractérisé en ce qu'à l'issue de la mise en place de la garniture (5) sur le fond de tarte (6), on désolidarise les différents éléments (2) en leur rendant leur état naturel.

5. Garniture de tarte (3, 5), destinée à remplir un fond de tarte (6), constituée d'éléments (2), tels que des morceaux ou des lamelles de fruits, disposés relativement entre eux selon un dessin géométrique ou autre, lesdits éléments (2) étant indépendants les uns des autres et sans cohésion pour les maintenir entre eux les uns aux autres, caractérisée par le fait que pour autoriser la mise en œuvre du procédé selon la revendication 1, elle se présente sous la forme d'une juxtapositon desdits éléments indépendants (2), avec un certain recouvrement afin qu'ils présentent une surface de contact (89), les éléments étant solidarisés entre eux par l'intermédiaire de moyens de cohésion se présentant sous la forme d'une solidification par refroidissement desdits éléments (2) ainsi disposés.

6. Garniture de tarte selon la revendication 5, caractérisée par le fait que lesdits moyens de cohésion se présentent sous la forme d'une surgélation desdits éléments indépendants (2) ainsi disposés.

## Claims

1. Process for making a tart, which will find an application in the field of pastry-making for the confection of savoury or sweet dishes, the said tart (7) being composed of a pastry-based tart base (6) and of a filling (3, 5) composed of elements (2) such as pieces or slices of fruits, distributed over the said base (6) so as to form a geometrical or other pattern, the said elements (2) being independent of one another and without any cohesion to hold them mutually to one another, characterized by the fact that:
   – the filling (3) is made, separately from the base (6), by placing the said independent elements (2) according to the desired pattern, and by juxtaposing them with a certain overlap so that they have a contact surface (9),
   – the filling (3) is fixed so that the said independent elements (2), thus arranged, form a manipulatable block (5), via means of cohesion taking the form of solidification by cooling of the said elements (2), these elements becoming joined together, two by two,
   – the filling (5) is placed on the tart base (6) that is cooked or to be cooked.

2. Process for making a tart according to claim 1, characterized in that the filling (3) is fixed by deep freezing.

3. Process for making a tart according to claim 1, characterized in that the different independent elements (2) a replaced in a mould (4) the profile of which is substantially identical with that of the tart base (6).

4. Process for making a tart according to claim 1, characterized in that, following the placing of the filling (5) on the tart base (6), the different elements (2) are disjoined by restoring them to their natural state.

5. Tart filling (3, 5) for filling a tart base (6) composed of elements (2), such as pieces or slices of fruits, arranged in relation to one another in a geometrical or other pattern, the said elements (2) being independent of one another and without cohesion to hold them to one another, characterized by the fact that, to permit implementation of the process according to claim 1, it takes the form of a juxtaposition of the said independent elements (2), with a certain overlap in order for them to have a contact surface (9), the elements being joined together via means of cohesion taking the form of solidification by cooling of the said elements (2) thus arranged.

6. Tart filling according to claim 5, characterized by the fact that the said means of cohesion take the form of deep freezing of the said independent elements (2) thus arranged.

## Patentansprüche

1. Verfahren zur Herstellung einer Torte, das im Bereich der Feinbäckerei Anwendung finden wird, zur Anfertigung von Salz- oder Süßgerichten, wobei die genannte Torte (7) besteht aus einem Tortenteigboden (6) und einer Einlage (3, 5), die aus Elementen (2) besteht, wie Obststücken oder -scheibchen, die einem geometrischen oder sonstigen Muster nach auf dem genannten Boden (6) verteilt sind, wobei die genannten Elemente (2) von einander unabhängig und ohne Bindung sind, dadurch gekennzeichnet, daß:
   – die Einlage (3) getrennt vom Boden (6) fertiggemacht wird, indem die genannten unabhängigen Elemente (2) dem gewünschten Muster nach und mit einer gewissen Überlappung nebeneinander angeordnet werden, damit sie eine Berührungsfläche (9) aufweisen,
   – die Einlage (3) so befestigt wird, daß die also angeordneten, genannten unabhängigen Elemente (2) einen hantierbaren Block (5) bilden, mittels Bindungsmittel in der Form einer Erstarrung durch Kühlung der genannten Elemente (2), wobei diese Elemente zwei an zwei mit einander verbunden werden,
   – die Einlage (5) auf dem gebackenen oder zu backenden Tortenboden (6) angeordnet wird.

2. Verfahren zur Herstellung einer Torte nach Anspruch 1, dadurch gekennzeichnet, daß die Einlage (3) durch Gefrieren befestigt wird.

3. Verfahren zur Herstellung einer Torte nach Anspruch 1, dadurch gekennzeichnet, daß die verschiedenen unabhängigen Elemente (2) in eine Form (4) mit einem Profil wesentlich gleich dem des Tortenbodens (6) gesetzt werden.

4. Verfahren zur Herstellung einer Torte nach Anspruch 1, dadurch gekennzeichnet, daß die verschiedenen Elemente (2), nach dem Anbringen der Einlage (5) auf den Tortenboden (6), von einander getrennt werden, wobei sie aufneu ihren natürlichen Zustand erhalten.

5. Torteneinlage (3, 5), die zum Füllen eines Tortenbodens (6) bestimmt ist, bestehend aus Elementen (2), wie Obststücken oder -scheibchen, die einem geometrischen oder sonstigen Muster nach zu einander angeordnet sind, wobei die genannten Elemente (2) von einander unabhängig sind und ohne Bindung um sie mit einander verbunden zu halten, dadurch gekennzeichnet, daß sie, um die Anwendung des Verfahrens nach Anspruch 1 zu erlauben, in der Form einer Nebeneinanderstellung der genannten unabhängigen Elemente (2) ist, mit einer gewissen Überlappung, damit sie eine Berührungsfläche (9) aufweisen, wobei die Elemente mittels Bindungsmittel in der Form einer Erstarrung durch Kühlung der also angeordneten, genannten Elemente (2) fest mit einander verbunden sind.

6. Torteneinlage nach Anspruch 5, dadurch gekennzeichnet, daß die genannten Bindungsmittel in der Form eines Gefrierens der also angeordneten, genannten unabhängigen Elemente (2) sind.

FIG.1

FIG.2

EP 0 236 651 B1